# NEUE EUROPÄISCHE PATENTSCHRIFT

(11) **EP 2 801 304 B2**
(45) Veröffentlichungstag und Bekanntmachung des Hinweises auf die Entscheidung über den Einspruch: **05.04.2023**
(45) Hinweis auf die Patenterteilung: 09.08.2017
(21) Anmeldenummer: 14165354.3
(22) Anmeldetag: 22.04.2014
(51) Int. Cl.: A47J 31/44, A47J 31/52

(54) **Bedien- und Anzeigevorrichtung für einen programmgesteuerten Getränkebereiter und Getränkebereiter**
Operating and display device for a program controlled beverage maker and beverage maker
Dispositif d'affichage et de commande pour un préparateur de boissons commandé par un programme et préparateur de boissons

(30) Priorität: 07.05.2013 DE 102013104714
(43) Veröffentlichungstag der Anmeldung: 12.11.2014
(73) Patentinhaber: Miele & Cie. KG, 33332 Gütersloh (DE)
(72) Erfinder: Bühlmeyer, Michael, 33803 Brockhagen (DE)

(56) Entgegenhaltungen:
- EP-A1- 1 992 263
- EP-A1- 2 303 761
- EP-A1- 2 474 255
- WO-A1-2007/003062
- WO-A1-2010/010587
- WO-A1-2011/046428
- US-A1- 2004 202 757
- US-A1- 2007 214 966

## Beschreibung

Die Erfindung betrifft eine Bedien- und Anzeigevorrichtung für einen programmgesteuerten Getränkebereiter zur Zubereitung von heißen Getränken aus zumindest zwei Zutaten, aufweisend einem berührungsempfindliches Display, auf dem verschiedene Getränke symbolisch als Feld anzeigbar und mittels Berührung entsprechender Bedien- und Anzeigefelder durch einen Benutzer auswählbar und/oder veränderbar sind.

Getränkebereiter, die als sogenannte Vollautomaten für die Zubereitung verschiedener Heißgetränke ausgebildet sind, benötigen eine Bedienvorrichtung, mit der der Benutzer sein Getränk auswählen oder hinsichtlich der Zutaten verändern kann. Hierbei sind verschiedene Möglichkeiten der Bedienung bekannt, beispielsweise eine Mehrzahl von Drucktasten, denen jeweils eine Auswahl oder Funktion hinterlegt ist. Hierbei muss der Benutzer genau die Bedeutung der jeweiligen Drucktasten erfassen, damit er die richtige Auswahl hinsichtlich seines Getränkes dem Gerät übermitteln kann.

Aus der WO 2007/003062 A1 ist eine Bedienvorrichtung bekannt, die ein berührungsempfindliches Display zur Anzeige von Auswahlmöglichkeiten umfasst. Die hier offenbarte Bedienvorrichtung ist so organisiert, dass die Auswahl und Einstellung des Getränkes über mehrere Menüebenen erfolgt. Ferner wird ein Zubereitungsprozess nach dem Aktivieren der Zubereitung visuell dargestellt.

Die WO 2011/046 428 A1 offenbart eine Bedien- und Anzeigevorrichtung für einen programmgesteuerten Getränkebereiter zur Zubereitung von heißen Getränken, die einen Berührfeld mit Symbolen zur Auswahl von Zutaten für ein Getränk umfasst. Ferner wird nach der Auswahl ein schematischer Ablauf einer Getränkezubereitung als animierte Darstellung angezeigt, wenn das Getränk zubereitet bzw. ausgegeben wird.

Die EP 1 992 263 A offenbart eine ebenfalls eine Bedien- und Anzeigevorrichtung für einen programmgesteuerten Getränkebereiter zur Zubereitung von heißen Getränken, die einen Berührbildschirm umfasst, auf den nach der Auswahl des Getränkes ein Behältnis schematisch dargestellt ist. Nach dem Beginn der Getränkeausgabe wird auf dem schematischen Behältnis das Befüllen als animierte Anzeige dargestellt. Während der Ausgabe kann der Benutzer durch Berührung des Berührbildschirms auf dem Behältersymbol die Ausgabemenge beeinflussen.

Die WO 2010/010 587 A1 offenbart eine ebenfalls eine Bedien- und Anzeigevorrichtung für einen programmgesteuerten Getränkebereiter zur Zubereitung von heißen Getränken, die einen Berührbildschirm umfasst, auf dem zu betätigende Berührflächen als Piktogramm oder mit Texten hervorgehoben sind.

Die EP 2 474 255 A1 offenbart eine Bedien- und Anzeigevorrichtung für einen programmgesteuerten Getränkebereiter zur Zubereitung von heißen Getränken, die einen Bildschirm und separate Berührflächen zur Auswahl von Getränken aufweist. Hierbei erfolgt die Auswahl durch Berührgesten auf streifenförmigen Flächen, die neben dem Bildschirm angeordnet sind.

Insgesamt kann es bei den vorbekannten Bedienvorrichtungen vorkommen, dass der Benutzer mit dem Angebot an Auswahl, - und Parametrierungsmöglichkeiten überfordert ist oder dass er aufgrund der gegebenen Unübersichtlichkeit falsche Einstellungen vornimmt.

Der Erfindung liegt somit die Aufgabe zu Grunde, eine Bedien- und Anzeigevorrichtung bereitzustellen, die die Auswahl und Einstellung von Getränken in einem Getränkebereiter für den Benutzer vereinfacht.

Erfindungsgemäß wird zumindest diese Aufgabe durch eine Bedien- und Anzeigevorrichtung mit den Merkmalen des unabhängigen Anspruchs 1 und durch einen Getränkebereiter gemäß Anspruch 9 gelöst. Vorteilhafte Ausgestaltungen und Weiterbildungen der Erfindung ergeben sich aus den jeweils abhängigen Ansprüchen.

Die mit der Erfindung erreichbaren Vorteile bestehen darin, dass der Benutzer intuitiv eine Auswahl bzw. Veränderung oder Parametrierung seines bevorzugten Getränkes vornehmen kann. Genaue Kenntnisse über einzelne Zutaten oder Parameter sind nicht notwendig. Ferner ist die Eingewöhnung an die Bedienphilosophie extrem kurz, da für die individuellen Einstellungen für das ausgewählte Getränk keine umständlichen und unübersichtlichen Bedienhandlungen notwendig sind. Dem Benutzer werden aufgrund der symbolischen Gesamtanzeige sehr übersichtlich eine Vielzahl von untereinander abhängigen Parametren dargestellt und zur Veränderung durch extrem einfache Bedienhandlungen angeboten.

Hierzu ist die Bedien- und Anzeigevorrichtung dazu ausgebildet, zur Einstellung der Zutaten für ein zuzubereitendes Getränk ein Symbol eines Behältnisses mit den einzelnen Anteilen der Zutaten schematisch auf dem Display anzuzeigen, wobei der Anteil zumindest einer Zutat mittels Berührgeste auf dem Bildschirm veränderbar ist, zur nachfolgenden Steuerung für Zubereitung des Getränks. Das bedeutet, dass der Benutzer den Finger auf die auf dem Bildschirm dargestellte Grenzlinie eines Zutatenanteils auflegt und anschließend mit einer Wischbewegung nach oben diesen Zutatenanteil erhöhen oder durch eine Wischbewegung nach unten entsprechend vermindern kann.

In einer bevorzugten Ausführung ist die Bedien- und Anzeigevorrichtung dazu ausgebildet, die symbolische Anzeige des Anteils der dargestellten Zutaten der Berührgeste folgen zu lassen. Das auf dem Bildschirm dargestellte Symbol verändert sich dabei entsprechend der Wischbewegung des Fingers auf dem Berührbildschirm, sodass der Benutzer über seine Einstellungen stets im Bilde ist, unmittelbar während der die Einstellungen oder Veränderungen am Berührbildschirm vornimmt.

Erfindungsgemäss ist die Bedien- und Anzeigevorrichtung dazu ausgebildet, mehr als eine Zutat hinsichtlich ihres Anteils am Getränk gleichzeitig durch Berührgesten verändern zu lassen. Mit dieser Maßnahme kann der Benutzer mit zwei Fingern den Berührbildschirm berühren, wobei mit einem Finger die Grenzlinie für eine erste Zutat und mit dem anderen Finger die Grenzlinie für eine weitere Zutat verschoben werden kann.

In einer zweckmäßigen Weiterbildung der Erfindung ist das anzuzeigende Behältersymbol in zumindest drei Bereiche aufgeteilt, wobei der untere Bereich der Kaffeemenge oder Stärke entspricht, der mittlerer Bereich der Wassermenge und der obere Bereich symbolisiert die Menge für Milchschaum. Damit können mehrere Getränke, wie Kaffee mit Milchschaum oder Cappucino entsprechend der bevorzugten Zutatenmengen eingestellt werden.

In einer weiteren, zweckmäßigen Weiterbildung der Erfindung ist das anzuzeigende Behältersymbol in zumindest vier Bereiche aufgeteilt, wobei der untere Bereich der Kaffeemenge oder Stärke entspricht, ein erster mittlerer Bereich ist für die Anzeige der Wassermenge ein weiterer, darüber angezeigter Bereich für die Anzeige der Milchmenge vorgesehen und der obere Bereich für Milchschaum. Damit können mehrere Getränke, wie Milchkaffee oder Latte Macciato entsprechend der bevorzugten Zutatenmengen eingestellt werden.

In einer weiteren Ausführung ist das Behältersymbol hinsichtlich seiner Größe durch eine Berührgeste veränderbar, wodurch die zu bereitende Gesamtmenge des Getränkes zumindest in etwa proportional einstellbar ist. Dabei kann als weitere Ausgabe ein Volumenmaß auf dem Bildschirm angezeigt werden, beispielsweise eine Anzahl von normalen Tassengrößen oder Werte in Mililiter oder Liter.

Um nach der Auswahl und Einstellung des Getränkes die Zubereitung zu aktivieren, ist eine separate Berührfläche oder die Funktion einer Mehrfachberührung des Behältersymbols zur Aktivierung der Getränkezubereitung und Ausgabe vorgesehen. Auch eine von dem Berührbildschirm separat angeordnete Berührfläche oder Taste kann für das Aktivieren vorgesehen sein.

In einer insgesamt zweckmäßigen Ausführung ist eine Umstellung auf eine Balkenanzeige oder Werteeingabe mittels eines Ziffernblocks auf dem Display für die Auswahl der Anteile der einzelnen Zutaten möglich. Mit diesen anderen Darstellungen können noch mehr Einstellmöglichkeiten dem Benutzer zur Verfügung gestellt werden, ohne dass die Bildschirmeingabe mit Untermenüs die Übersichtlichkeit verliert.

In einer zweckmäßigen Weiterbildung ist ein sogenannter Expertenmodus einstellbar, in dem weitere Parametereingaben oder Grundeinstellungen, wie Initialeinstellungen für die einzelnen auszuwählenden Getränke vorgenommen werden können.

Die Erfindung betrifft ferner einen programmgesteuerten Getränkebereiter, umfassend eine Bedien- und Anzeigevorrichtung wie vorstehend genannt, eine Steuereinrichtung sowie Lastmittel, welche zur Durchführung eines Programms zur Zubereitung eines Getränkes gemäß der vorgenommenen Einstellungen durch die Steuereinrichtung aktiviert und deaktiviert werden können.

Ein Ausführungsbeispiel der Erfindung ist in den Zeichnungen rein schematisch dargestellt und wird nachfolgend näher beschrieben. Es zeigen
- Fig. 1:: einen Getränkebereiter mit bereitgestelltem Getränkegefäß
- Fig. 2:: beispielhaft eine Bediengeste und
- Fig. 3, 4:: schematische Darstellungen für verschiedene Bedienmöglichkeiten.

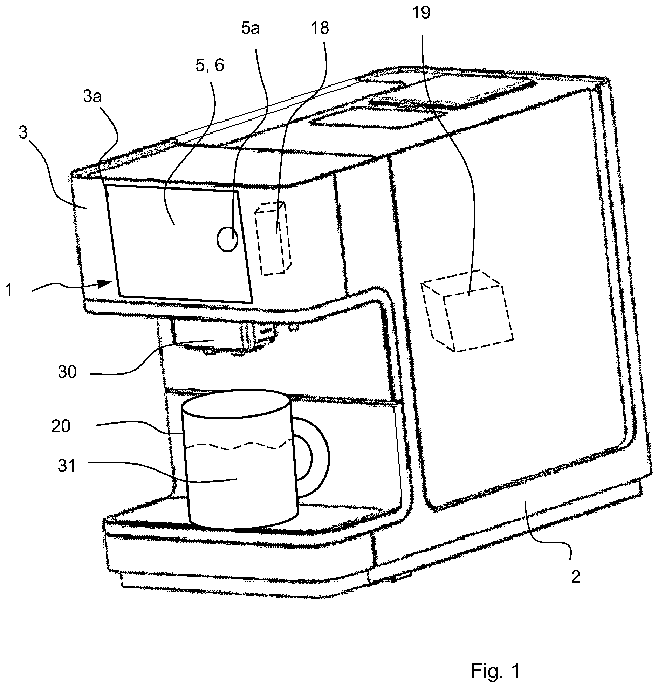

Fig. 1 zeigt einen Kaffeebereiter 2, der frontseitig einen Getränkeauslauf 30, der in der Höhe verstellbar ausgebildet sein kann zur Verwendung unterschiedlich großer Gefäße 20, und eine Bedienvorrichtung 1 mit Eingabemitteln 4 und Anzeigemitteln 5. Als Eingabemittel ist ein Berührbildschirm 5 oder anders ausgedrückt ein berührungsempfindliches Display (Touchscreen) zur Eingabe von Bedienhandlungen oder Gerätefunktionen vorhanden. Als Anzeigemittel dient das Display 6, das hinter einem Klarsichtbereich 3a der Blende 3 angeordnet ist. Zu erkennen ist ferner, dass sich unterhalb der Bedienvorrichtung 1, bezogen auf die betriebsgemäße Aufstellposition des Gerätes 2, der Getränkeauslauf 30 befindet. Der Getränkebereiter 2 umfasst ferner eine Steuereinrichtung 18, um die im Gerät 2 befindlichen Lasten 19, wie Pumpen, Heizkörper zum Wasserkochen oder Dampferzeugung und das Mahlwerk zu aktivieren oder deaktivieren, entsprechend des Programmablaufs in der Steuereinrichtung 18 für das jeweils zuzubereitende Getränk. 31.

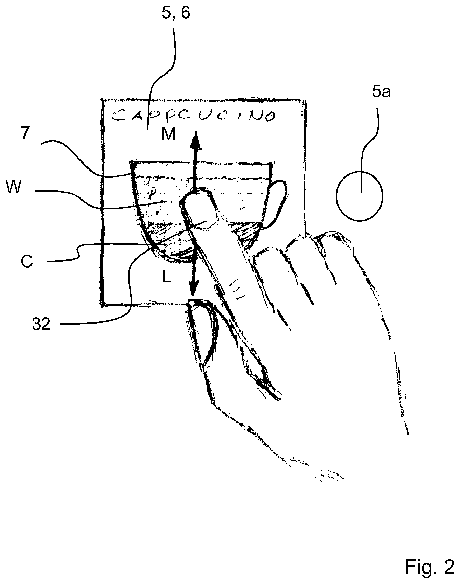

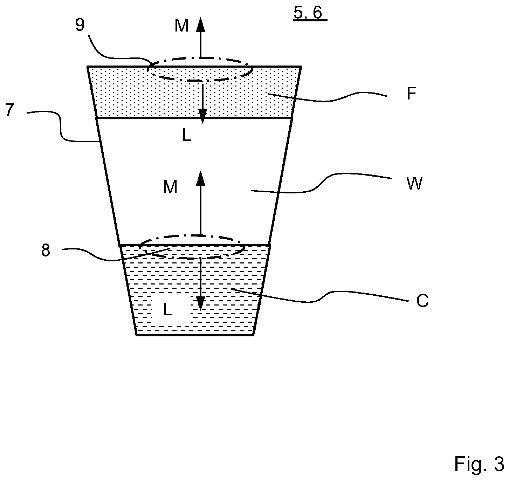

Fig. 2 und 3 zeigen beispielhaft die Bedien- und Anzeigevorrichtung 1 im betriebsgemäßen Zustand bzw. während einer Bedienhandlung. Der Benutzer hat bereits das Getränk "Cappucino" ausgewählt und ist nun dabei, das Getränk auf seinen persönlichen Geschmack zu trimmen. Das Display zeigt dabei symbolisch ein Gefäß an 7, wobei innerhalb des Gefäßes 7 der Anteil der ersten Zutat Kaffee C und der zweiten Zutat Wasser W dargestellt ist. Der Finger 32 des Benutzers berührt dabei die Grenzlinie zwischen dem Kaffeeanteil und dem Wasseranteil, wobei eine Wischbewegung in Pfeilrichtung M einen erhöhten Kaffeeanteil 8 und eine Wischbewegung in Pfeilrichtung L einen verminderten Kaffeeanteil 8 für die nachfolgende Zubereitung programmiert oder einstellt. Der Anteil der Wassermenge 8 wird auf der Anzeige 6 umgekehrt proportional mit verändert, jedoch wird die Gesamtmenge des Getränkes von der Intensität oder vom Anteil der Kaffeemenge nicht beeinflusst. Es kann auch der Mahlgrad verändert werden, wenn beispielsweise eine Wischbewegung Q quer zu den eben genannten Richtungen M und L erfolgt.

Fig. 3 zeigt schematisch ein Beispiel des Gefäßes 7, mit den Anteilen der Zutat Kaffee C, Wasser W und Milchschaum F. Wird nun die Grenzlinie C-W im Berührbereich 8 in Pfeilrichtung M oder L durch eine Berührgeste verschoben, so wird der Anteil der Zutat Kaffee entsprechend verändert. Durch eine Wischgeste am Behälterrand 9 in Richtung M wird eine erhöhte Gesamtmenge für das zuzubereitende Getränk eingestellt, als mehr Kaffeepulver und mehr Wasser.

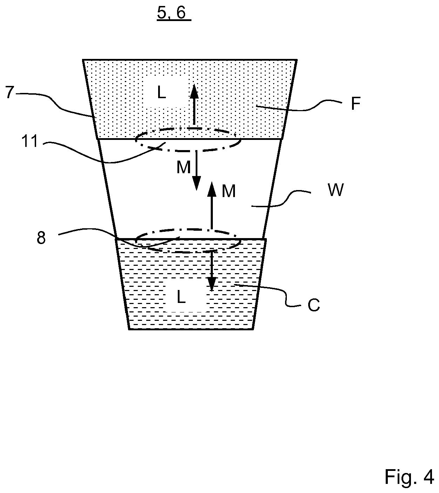

Fig. 4 zeigt eine weitere Ausführung der Bedien- und Anzeigevorrichtung 1, die dazu ausgebildet ist, ein Gefäß 7, mit den Anteilen der Zutat Kaffee C, Wasser W und Milchschaum F darzustellen. Wie für das vorstehende Beispiel genannt, kann nun die Grenzlinie C-W im Berührbereich 8 in Pfeilrichtung M oder L durch eine Berührgeste verschoben werden, so wird der Anteil der Zutat Kaffee entsprechend verändert. Gleichzeitig, vorher oder später kann durch Berührung und Verschieben des zweiten Berührbereichs 11 auf der Grenzlinie W-F zwischen den dargestellten Zutatenanteilen Wasser W und Michschaum F die Menge an Milchschaum verändert werden. Hierbei würde sich der Anteil Wasser W umgekehrt proportional mit verändern, da die Gesamtmenge des Getränkes 31 unverändert bleibt. Für die Zubereitung von einem Getränk 32 mit einer weiteren Zutat, beispielsweise Milch, wird ein weiterer Zutatenanteil (nicht dargestellt) in dem skizzierten Gefäß 7 symbolisch dargestellt, der entsprechend verändert werden kann, wie es vorstehend für die Anteile Kaffee C und Milchschaum F beschrieben wurde.

## Patentansprüche

1. Bedien- und Anzeigevorrichtung (1) für einen programmgesteuerten Getränkebereiter (2) zur Zubereitung von heißen Getränken (31) aus zumindest zwei Zutaten (C, W), aufweisend ein berührungsempfindliches Display (5, 6), auf dem verschiedene Getränke symbolisch als Feld (7) anzeigbar und mittels Berührung entsprechender Bedien- und Anzeigefelder (7, C, W, F) durch einen Benutzer auswählbar und/oder veränderbar sind,
**dadurch gekennzeichnet,**
**dass** die Bedienvorrichtung (1) dazu ausgebildet ist, zur Einstellung der Zutaten für ein zuzubereitendes Getränk (31) ein Symbol eines Behältnisses (7) mit den einzelnen Anteilen der Zutaten (C, W, F) für das zuzubereitende Getränk schematisch auf dem Display (6) anzuzeigen, wobei der Anteil zumindest einer Zutat (C, W, F) mittels Berührgeste auf dem Bildschirm (5, 6) veränderbar ist, derart, dass der Benutzer den Finger auf die auf dem Bildschirm dargestellte Grenzlinie eines Zutatenanteils auflegt und anschließend mit einer Wischbewegung nach oben diesen Zutatenanteil erhöhen oder durch eine Wischbewegung nach unten entsprechend vermindern kann, zur nachfolgenden Steuerung für Zubereitung des Getränks, wobei die Bedien- und Anzeigevorrichtung (1) dazu ausgebildet ist, mehr als eine Zutat (C, W, F) hinsichtlich ihres Anteils am Getränk (32) gleichzeitig durch Berührgesten verändern zu lassen, indem die erste Grenzlinie (8) für die erste Zutat und die weitere Grenzlinie (11) für die weitere Zutat verschoben wird.

2. Bedien- und Anzeigevorrichtung nach Anspruch 1,
**dadurch gekennzeichnet,**
**dass** die Bedien- und Anzeigevorrichtung (1) dazu ausgebildet ist, die symbolische Anzeige des Anteils (C, W, F) der Berührgeste folgen zu lassen.

3. Bedien- und Anzeigevorrichtung nach Anspruch 1,
**dadurch gekennzeichnet,**
**dass** das anzuzeigen des Behältersymbol (7) in zumindest drei Bereiche aufgeteilt ist, wobei der unterer Bereich der Kaffeemenge (C) oder Stärke entspricht, ein mittlerer Bereich für Wassermenge (W) und/oder der obere Bereich für den Anteil Milchschaum (F) vorgesehen ist.

4. Bedien- und Anzeigevorrichtung nach Anspruch 1,
**dadurch gekennzeichnet,**
**dass** das anzuzeigen des Behältersymbol (7) in zumindest vier Bereiche aufgeteilt ist, wobei der untere Bereich der Kaffeemenge (C) oder Stärke entspricht, ein erster mittlerer Bereich für Wassermenge (W) ein weitere, darüber angezeigter Bereich für den Anteil einer Milchmenge und der obere Bereich für den Anteil Milchschaum (F) vorgesehen ist.

5. Bedien- und Anzeigevorrichtung nach Anspruch 1,
**dadurch gekennzeichnet,**
**dass** das anzuzeigen des Behältersymbol (7) selbst hinsichtlich der Größe durch Berührgeste veränderbar, wodurch die Gesamtmenge des Getränkes (32) einstellbar ist.

6. Bedien- und Anzeigevorrichtung nach Anspruch 1,
**dadurch gekennzeichnet,**
**dass** eine separate Berührfläche (5a) oder eine Mehrfachberührung auf dem Behältersymbol (7) vorgesehen ist zum Aktivieren der Getränkezubereitung und/oder Getränkeausgabe.

7. Bedien- und Anzeigevorrichtung nach Anspruch 1,
**dadurch gekennzeichnet,**
**dass** die Bedien- und Anzeigevorrichtung (1) für eine Umstellung auf eine Balkenanzeige oder Werteeingabe mittels eines Ziffernblocks auf dem Display (5, 6) eingerichtet ist.

8. Bedien- und Anzeigevorrichtung nach Anspruch 1,
**dadurch gekennzeichnet,**
**dass** die Bedien- und Anzeigevorrichtung (1) in einen Expertenmodus geschaltet werden kann für weitere Parametereingaben oder Grundeinstellungen.

9. Programmgesteuerter Getränkebereiter (2), umfassend eine Bedien- und Anzeigevorrichtung (1) nach einem der Ansprüche 1 bis 8, einer Steuereinrichtung (18) sowie Lastmittel (19), welche zur Durchführung eines Programms zur Zubereitung eines Getränkes (32) gemäß der vorgenommenen Einstellungen aktiviert und deaktiviert werden können.

## Claims

1. Operating and display device (1) for a program-controlled beverage preparation machine (2) for preparing hot beverages (31) consisting of at least two ingredients (C, W), comprising a touch-sensitive display (5, 6) on which various beverages can be symbolically displayed as a field (7) and can be selected and/or changed by a user by touching corresponding operating and display fields (7, C, W, F), **characterised in that**, in order to adjust the ingredients for a beverage (31) to be prepared, the operating device (1) is designed to schematically display a symbol of a receptacle (7) on the display (6) together with the individual proportions of the ingredients (C, W, F) for the beverage to be prepared, it being possible to change the proportion of at least one ingredient (C, W, F) by means of touch gestures on the screen (5, 6) in such a way that the user places their finger on the boundary line, shown on the screen, of an ingredient proportion, and can then increase this ingredient proportion by an upward swiping movement or reduce it accordingly by a downward swiping movement, in order to subsequently control the preparation of the beverage, wherein the operating and display device (1) is designed such that it allows, by means of touch gestures, more than one ingredient (C, W, F) to be changed simultaneously in terms of the proportion thereof in the beverage (32) by moving the first boundary line (8) for the first ingredient and the further boundary line (11) for the further ingredient.

2. Operating and display device according to claim 1,
**characterised in that**
the operating and display device (1) is designed such that it allows the symbolic display of the proportion (C, W, F) to follow up the touch gesture.

3. Operating and display device according to claim 1,
**characterised in that**
the receptacle symbol (7) to be displayed is divided into at least three regions, the lower region corresponding to the amount of coffee (C) or strength, a central region being provided for the amount of water (W) and/or the upper region being provided for the proportion of foamed milk (F).

4. Operating and display device according to claim 1,
**characterised in that**
the receptacle symbol (7) to be displayed is divided into at least four regions, the lower region corresponding to the amount of coffee (C) or strength, a first central region being provided for the amount of water (W), an additional region displayed thereabove being provided for the proportion of an amount of milk, and the upper region being provided for the proportion of foamed milk (F).

5. Operating and display device according to claim 1,
**characterised in that**
the receptacle symbol (7) to be displayed can itself be adjusted in terms of size by touch gestures, as a result of which the total amount of the beverage (32) can be adjusted.

6. Operating and display device according to claim 1,
**characterised in that**
a separate touch surface (5a) or repeated touching is provided on the receptacle symbol (7) in order to activate the preparation and/or dispensing of the beverage.

7. Operating and display device according to claim 1,
**characterised in that**
the operating and display device (1) is configured such that it can be converted into a bar display or value input by means of a numeric keypad on the display (5, 6).

8. Operating and display device according to claim 1,
**characterised in that**
the operating and display device (1) can be switched into an expert mode in order to input additional parameters or for default settings.

9. Program-controlled beverage preparation machine (2), comprising an operating and display device (1) according to any of claims 1 to 8, a control apparatus (18) and loading means (19), which device can be activated or deactivated in order to implement a program for preparing a beverage (32) according to the applied settings.

## Revendications

1. Dispositif (1) de commande et d'affichage pour un dispositif (2) de préparation de boissons commandé par un programme, en vue de la préparation de boissons (31) chaudes composées de tout au moins deux ingrédients (C, W), lequel dispositif de commande et d'affichage présente un écran d'affichage (5, 6) tactile, sur lequel diverses boissons peuvent être affichées symboliquement sous la forme d'un champ (7) et peuvent être sélectionnées et/ou peuvent être modifiées par un utilisateur en touchant des champs de commande et d'affichage (7, C, W, F) correspondants, **caractérisé en ce que** le dispositif de commande (1) est conçu en ce sens qu'il permet d'afficher de manière schématique un symbole (7) d'un contenant sur l'écran d'affichage (6), avec les diverses proportions des ingrédients (C, W, F) pour une boisson à préparer (31), en vue du dosage des ingrédients pour la boisson à préparer, dans lequel la proportion de tout au moins un ingrédient (C, W, F) peut être modifiée au moyen de gestes tactiles sur l'écran d'affichage (5, 6) de telle sorte que l'utilisateur appuie le doigt sur la ligne de délimitation, laquelle est représentée à l'écran d'affichage, d'une proportion d'ingrédient pour pouvoir ensuite augmenter cette portion d'ingrédient en effectuant un mouvement de balayage vers le haut ou pour pouvoir ensuite diminuer cette portion d'ingrédient de manière correspondante en effectuant un mouvement de balayage vers le bas, en vue de la commande consécutive pour la préparation de la boisson, en quoi le dispositif (1) de commande et d'affichage est conçu en ce sens qu'il permet, par l'intermédiaire de gestes tactiles, de modifier plus d'un ingrédient (C, W, F) simultanément au regard de sa proportion dans la boisson (32), en déplaçant la première ligne limite (8) pour le premier ingrédient et l'autre ligne limite (11) pour l'autre ingrédient.

2. Dispositif de commande et d'affichage selon la revendication 1,
**caractérisé en ce que**
le dispositif (1) de commande et d'affichage est conçu en ce sens qu'il permet de faire suivre aux gestes tactiles l'affichage symbolique de la proportion (C, W, F).

3. Dispositif de commande et d'affichage selon la revendication 1,
**caractérisé en ce que**
l'affichage du symbole (7) du contenant est réparti en tout au moins trois zones, dans lequel la zone inférieure correspond à la quantité de café (C) ou à l'intensité du café et dans lequel une zone centrale est prévue pour la quantité d'eau (W) et/ou la zone supérieure est prévue pour la proportion de mousse de lait (F).

4. Dispositif de commande et d'affichage selon la revendication 1,
**caractérisé en ce que**
l'affichage du symbole (7) du contenant est réparti en tout au moins quatre zones, dans lequel la zone inférieure correspond à la quantité de café (C) ou à l'intensité du café et dans lequel une première zone centrale est prévue pour la quantité d'eau (W), une autre zone, laquelle est affichée au-dessus de la précédente, est prévue pour la proportion d'une quantité de lait et la zone supérieure est prévue pour la proportion mousse de lait (F).

5. Dispositif de commande et d'affichage selon la revendication 1,
**caractérisé en ce que**
l'affichage du symbole (7) du contenant proprement dit peut, par l'intermédiaire de gestes tactiles, être modifié au regard de la dimension, permettant par conséquent de régler la quantité totale de la boisson (32).

6. Dispositif de commande et d'affichage selon la revendication 1,
**caractérisé en ce que**
une surface tactile (5a) séparée ou un contact tactile en plusieurs fois est prévu(e) sur le symbole (7) du contenant en vue de l'activation de la préparation de la boisson et/ou en vue de la distribution de la boisson.

7. Dispositif de commande et d'affichage selon la revendication 1,
**caractérisé en ce que**
le dispositif (1) de commande et d'affichage est adapté pour un passage à un affichage sous forme de barres ou à la saisie de valeurs au moyen d'un pavé numérique figurant sur l'écran d'affichage (5, 6).

8. Dispositif de commande et d'affichage selon la revendication 1,
**caractérisé en ce que**
le dispositif (1) de commande et d'affichage peut être commuté dans un mode expert en vue de la saisie d'autres paramètres ou pour des réglages de base.

9. Dispositif (2) de préparation de boissons, commandé par un programme, comprenant un dispositif (1) de commande et d'affichage selon l'une des revendications 1 à 8, un mécanisme de commande (18), ainsi que des moyens de charge (19), lesquels peuvent être activés et désactivés en vue de la réalisation d'un programme destiné à la préparation d'une boisson (32) conformément aux réglages entrepris.
